(19) **Europäisches Patentamt**

**European Patent Office**

**Office européen des brevets**

(11) Veröffentlichungsnummer: **0 533 016 B1**

(12) **EUROPÄISCHE PATENTSCHRIFT**

(45) Veröffentlichungstag der Patentschrift: **25.10.95**

(51) Int. Cl.⁶: **A01N 47/38**, A01N 47/18, A01N 43/78, A01N 43/653, A01N 43/52, A01N 25/02, B27K 3/50, B27K 3/52, //(A01N47/18,43:653,33:12, 25:02)

(21) Anmeldenummer: **92115276.5**

(22) Anmeldetag: **07.09.92**

(54) **Wasserbasierte, lösungsmittel- und emulgatorfreie mikrobizide Wirkstoffkombination.**

(30) Priorität: **19.09.91 DE 4131184**

(43) Veröffentlichungstag der Anmeldung:
**24.03.93 Patentblatt 93/12**

(45) Bekanntmachung des Hinweises auf die Patenterteilung:
**25.10.95 Patentblatt 95/43**

(84) Benannte Vertragsstaaten:
**AT DE DK FR GB IT NL SE**

(56) Entgegenhaltungen:
EP-A- 0 035 096      EP-A- 0 189 844
EP-A- 0 237 764      EP-A- 0 252 875
EP-A- 0 316 970      EP-A- 0 328 466
EP-A- 0 336 489      BE-A- 904 660
DE-A- 3 614 909      FR-A- 2 368 223
FR-A- 2 472 341

(73) Patentinhaber: **BAYER AG**

**D-51368 Leverkusen (DE)**

(72) Erfinder: **Ludwig, Georg-Wilhelm, Dr.**
**Kemmerhofstrasse 181**
**W-4150 Krefeld 1 (DE)**
Erfinder: **Rother, Heinz-Joachim, Dr.**
**Dahlerdyk 124 E**
**W-4150 Krefeld 1 (DE)**
Erfinder: **Kochta, Joachim, Dr.**
**Landsberger Strasse 69**
**W-5300 Bonn 1 (DE)**
Erfinder: **Büchel, Karl Heinz, Prof. Dr.**
**Dabringhausener Strasse 42**
**W-5093 Burscheid (DE)**
Erfinder: **Holmwood, Graham, Dr.**
**Krutscheider Weg 105**
**W-5600 Wuppertal 11 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 533 016 B1

**Beschreibung**

Die vorliegende Erfindung betrifft neue vorzugsweise wässrige, gegebenenfalls organisch-lösungsmittel- und emulgatorfreie mikrobizide Wirkstoffkombinationen aus bekannten Azolfungiziden und/oder Benzimidazolderivaten und quartären Ammoniumverbindungen.

Es ist bekannt, daß Imidazol- oder Triazolfungizide, wie z.B. das $\alpha$-[2-(4-Chlorphenyl)-ethyl]-$\alpha$-(1,1-dimethylethyl)-1-H-1,2,4-triazol-1-ethanol (Tebuconazol), das 2-(1-Chlorcyclopropyl)-1-(2-chlorphenyl)-3-(1,2,3-triazol-1-yl)-propan-2-ol und das 1-[[2-(2,4-Dichlorphenyl)-4-n-propyl-1,3-dioxolan-2-yl]-methyl]-1-H-1,2,4-triazol (Propiconazol) als solche oder in Form ihrer Salze zum Schutz von Pflanzen und Saatgut verwendet werden können (vgl. z.B. EP-A 0 040 345, EP-A 0 052 424).

Weiterhin ist bekannt, daß diese Verbindungen auch für den Einsatz im Materialschutz zur Bekämpfung materialzerstörender oder materialverfärbender Mikroben geeignet sind (vgl. z.B. DE-OS 3 621 494 und US 4 079 062).

Die Azolfungizide wie das genannte Tebuconazol weisen jedoch Wirkungslücken bei einigen für den Materialschutz relevanten Keimen wie z.B. Trichoderma spec. auf.

Desweiteren ist durch die oft geringe Wasserlöslichkeit von Azolen deren Einsatz in einigen Anwendungsgebieten wie z.B. Leder, wasserbasierter Holzschutz, Desinfektion, Kühlwasserbehandlung, Papierindustrie, Metallverarbeitung, technische Konservierung wasserhaltiger Produkte eingeschränkt oder nicht möglich.

Weiterhin ist bekannt, daß Benzimidazolderivate wie Benzimidazolcarbaminsäuremethylester (BCM, Carbendazim), Methyl-1-(butylcarbamoyl)-2-benzimidazolcarbamat (Benomyl), 2-(2'-Furyl)-1H-benzimidazol (Fuberidazol) und 2-(4'-Thiazolyl)-benzimidazol fungizide Wirksamkeit aufweisen (Farm Chemicals Handbook). Diese können auch im Materialschutz Verwendung finden.

EP-A-189844 beschreibt wasserlösliche fungizide Mittel für den Holzschutz, die Sulfonsäuresalze des Carbondazims und quaternäre Ammoniumsalze wie z.B. Tetradecyldimethyl-benzylammoniumchlorid enthalten.

EP-A-328466 offenbart emulgierbare Konzentrate für die Holzbehandlung, die ein Azolfungizid wie z.B. Azaconazol, ein Benzimidazol wie z.B. Carbendazim, ein quaternäres Ammoniumsalz sowie ein flüssiges Vehikel enthalten, das als lösungsvermittelnde Komponente Carbonsäuren enthält wie z.B. Essigsäure oder Propionsäure, die zur Salzbildung mit den N-heterocyclischen Wirkstoffen befähigt sind.

BE-A-904660 beschreibt ebenfalls Gemische aus Azolen wie z.B. Azaconazol, die als Säureadditionssalze vorliegen können, mit quaternären Ammoniumsalzen.

DE-A-3614909 schließlich offenbart saure mit Wasser mischbare Holzschutzmittel die unter anderem Thiabendazol und Benzalkoniumchlorid enthalten.

Benzimidazolderivate wie z.B. BCM sind in den üblichen organischen Lösemitteln schwer löslich, in Wasser nahezu unlöslich. Außerdem weisen sie Lücken im Wirkspektrum auf, die einen Einsatz im Materialschutz wegen der dort geforderten Breite des Wirkspektrums erschweren können. Auf Grund der Löslichkeitsdaten ist eine direkte Anwendung in wasserbasierten Systemen praktisch ausgeschlossen.

Quartäre Ammoniumsalze sind als breit wirksame Mikrobizide seit langem bekannt und finden z.B. Anwendung in der Desinfektion und Textilkonservierung.

Zwar sind diese Wirkstoffe meistens gut wasserlöslich, neigen aber bei den Anwendungskonzentrationen zu starker Schaumbildung, die in vielen Einsatzfeldern stört. Außerdem können sie aufgrund ihrer kationenaktiven Eigenschaften mit anionischen Komponenten wie Seifen, Tensiden etc. reagieren. Dadurch kann ihr Eigenschaftsprofil negativ beeinflußt werden, beziehungsweise können sie desaktiviert werden. Desweiteren ist bekannt, daß quatäre Ammoniumsalze durch die Anwesenheit von Eiweiß und Schmutz leicht desaktiviert werden.

Für viele Anwendungen in der Praxis des Materialschutzes ist es wünschenswert, die Wirkstoffe in flüssigen Formulierungen einzusetzen, die frei von organischen Lösemitteln sind oder in denen der entsprechende Lösemittelanteil drastisch reduziert ist.

Wasserunlösliche Lösemittel sind inkompatibel mit wäßrigen Produkten wie Lederflotten, Dispersionsfarben, Kühl- und Prozesswässern, Desinfektionsmitteln.

Häufig sind auch die Anwender nicht auf die Handhabung von Produkten in Form von Lösungen in organischen Lösungsmitteln eingerichtet, da zur Aufbringung aus dem Lösungsmittel und zu dessen Rückgewinnung, die zur Vermeidung ökologischer Probleme unerläßlich ist, besondere Vorrichtungen erforderlich sind, die mit hohen Investitionskosten verbunden sind.

Wasserlösliche Lösungsmittel wären als Lösungsvermittler in wäßrigen Systemen prinzipiell geeignet. Aber sie können, wenn sie ins Abwasser gelangen, ökologische Probleme hervorrufen. Zudem können Lösemittel sich in den zu schützenden Produkten störend bemerkbar machen.

Eine weitere Möglichkeit der Lösevermittlung zur Herstellung wasserbasierter Wirkstoffformulierungen besteht in der Verwendung von Emulgatoren. Bei stark wasserunlöslichen Verbindungen wie Azolen und Benzimidazolderivaten werden hierfür in der Regel große Emulgatormengen benötigt, was aus ökologischen Gründen vermieden werden soll. Ebenso kann die Wirksamkeit mikrobizider Wirkstoffe stark durch die Verwendung von Emulgatoren beeinträchtigt werden. Ebenso kann die Einsetzbarkeit für bestimmte Systeme begrenzt sein.

Aufgabe der Erfindung war daher die Bereitstellung neuer, vorzugsweise wasserbasierter, lösungsmittel- und emulgatorfreier mikrobizider Wirkstofformulierungen auf der Basis von Azolfungiziden und/oder Benzimidazolderivaten, die sich einfach mit Wasser verdünnen lassen und dabei lagerstabile Gebrauchslösungen liefern.

Es wurde nun gefunden, daß eine neue Wirkstoffkombination aus Tebuconazole und BCM in Form ihrer Hydrohalogenide und $C_{12}$-$C_{14}$-Alkyl-benzyl-dimethylammoniumchlorid, besonders hohe mikrobizide Wirksamkeit aufweist und gleichzeitig vollkommen wasserlöslich ist und in Wasser stabile Lösungen liefert.

Derartige wäßrige Formulierungen vermeiden die vorgenannten ökologischen und anwendungstechnischen Nachteile lösemittelbasierter oder emulgatorvermittelter Formulierungen und stellen insofern eine wertvolle Bereicherung des Standes der Technik dar.

Zur Herstellung von Säureadditionssalzen kommen vorzugsweise folgende Säuren in Frage: Die Halogenwasserstoffsäuren, wie z.B. Chlorwasserstoffsäure und Bromwasserstoffsäure, insbesondere Chlorwasserstoffsäure.

Die Säureadditions-Salze der Verbindungen können in einfacher Weise nach üblichen Salzbildungsmethoden, z.B. durch Lösung einer Verbindung in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Die Gewichtsverhältnisse der Wirkstoffe in den Wirkstoffkombinationen können in relativ großen Bereichen variiert werden.

So kann das Gewichtsverhältnis von Azolverbindungen (A) zu Benzimidazolderivaten (B) im Bereich von 1:99 bis 99:1 vorliegen, bevorzugt ist das Gewichtsverhältnis A:B = 1:9 bis 9:1, ganz besonders bevorzugt 1:5 bis 5:1. Das Gewichtsverhältnis der Verbindungen (A) oder (B) oder der Summe (A) + (B) zum Anteil quartärer Ammoniumverbindungen (C) kann im Bereich von 1:99 bis 99:1 vorliegen, bevorzugt ist 1:9 bis 9:1, ganz besonders bevorzugt das Gewichtsverhältnis 1:5 bis 5:1.

Die erfindungsgemäßen Wirkstoffkombinationen weisen eine starke Wirkung gegen Mikroorganismen auf. Die erfindungsgemäßen Wirkstoffkombinationen werden im Materialschutz zum Schutz technischer Materialien verwendet; sie sind vor allem wirksam gegen Schimmelpilze, holz- bzw. lederverfärbende und holz- bzw. lederzerstörende Pilze und Bakterien, sowie gegen Hefen, Algen und Schleimorganismen.

Beispielhaft - ohne jedoch zu limitieren - seien die folgenden Gattungen von Mikroorganismen genannt:

Alternaria wie Alternaria tenuis, Aspergillus wie Aspergillus niger und Aspergillus terreus, Aureobasidium wie Aureobasidium pullulans, Chaetomium wie Chaetomium globosum, Cladosporium wie Cladosporium herbarum, Coniophora wie Coniophora puteana, Gliocladium wie Gliocladium virens, Lentinus wie Lentinus tigrinus, Paecilomyces wie Paecilomyces varioti, Penicillium wie Penicillium brevicaule, Penicillium glaucum und Penicillium pinophilum, Polyporus wie Polyporus versicolor, Sclerophoma wie Sclerophoma pityophila, Streptoverticillium wie Streptoverticillium reticulum, Trichoderma wie Trichoderma viride, Trichophyton wie Trichophyton mentagrophytes;

Escherichia wie Escherichia coli, Pseudomonas wie Pseudomonas areuginosa, Staphylococcus wie Staphylococcus aureus;

Candida wie Candida albicans.

Die Menge der eingesetzten Wirkstoffkombinationen ist von der Art und dem Vorkommen der Mikroorganisem, der Keimzahl und von dem Medium abhängig. Die optimale Einsatzmenge kann bei der Anwendung jeweils durch Testreihen ermittelt werden. Im allgemeinen ist es jedoch ausreichend 0,001 bis 20 Gew.-%, vorzugsweise 0,05 bis 10 Gew.-%, insbesondere 0,05 bis 2 Gew.-%, der Wirkstoffgemische, bezogen auf das zu schützende Material, einzusetzen.

Die neuen Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit Lösungs- bzw. Verdünnungsmitteln, Emulgatoren, Dispergatoren und/oder Binde- oder Fixiermittels, gegebenenfalls Sikkative und UV-Stabilisatoren und gegebenenfalls Farbstoffen und Pigmenten sowie weiteren Verarbeitungshilfsmitteln.

Als Lösungs- bzw. Verdünnungsmittel kommen organischchemische Lösungsmittel oder Lösungsmittelgemische und/oder polare organische Lösungsmittel oder Lösungsmittelgemische und/oder ein öliges bzw. ölartiges organisch-chemisches Lösungsmittel oder Lösungsmittelgemisch und/oder Wasser mit mindestens einem Emulgator und/oder Netzmittel in Frage. Als übliche schwerflüchtige, wasserunlösliche ölige oder ölartige Lösungsmittel werden vorzugsweise die jeweiligen Mineralöle/mineralöl-haltige Lösungsmittelgemische oder deren Aromatenfraktionen verwendet. Beispielhaft seien Testbenzin, Petroleum oder Alkylbenzole genannt, daneben Spindelöl und Monochlornaphthalin. Die Siedebereiche dieser schwerflüchtigen Lösemittel(gemische) überstreichen den Bereich von ca. 170 °C bis maximal 350 °C.

Die vorbeschriebenen schwerflüchtigen öligen oder ölartigen Lösungsmittel können teilweise durch leichter flüchtige organisch-chemische Lösungsmittel ersetzt werden.

Zur Herstellung eines Holzschutzmittels wird vorzugsweise ein Teil des oben beschriebenen Lösungsmittels oder Lösungsmittelgemisches durch ein polares organischchemisches Lösungsmittel oder Lösungsmittelgemisch ersetzt. Vorzugsweise gelangen dabei Lösungsmittel, die Hydroxygruppen, Estergruppen, Ethergruppen oder Gemische dieser Funktionalitäten enthalten, zum Einsatz. Beispielhaft seien Ester oder Glykolether genannt. Als Bindemittel werden erfindungsgemäß verstanden wasserverdünnbare bzw. in organisch-chemischen Lösungsmitteln löslich, dispergier- oder emulgierbare Kunstharze, bindende trocknende Öle, z.B. auf Basis von Acrylharzen, Vinylharzen, Polyesterharzen, Polyurethanharzen, Alkydharzen, Phenolharzen, Kohlenwasserstoffharzen, Siliconharzen. Das benutzte Bindemittel kann als Lösung, Emulsion oder Dispersion eingesetzt werden. Vorzugsweise werden Gemische aus Alkydharze und trocknendem pflanzenlichen Öl verwendet. Besonders bevorzugt sind Alkydharze mit einem Ölanteil zwischen 45 und 70 %.

Das erwähnte Bindemittel kann ganz oder teilweise durch ein Fixierungsmittel(gemisch) oder ein Weichmacher (gemisch) ersetzt werden. Diese Zusätze sollen einer Verflüchtigung der Wirkstoffe sowie einer Kristallisation bzw. Ausfällens vorbeugen. Vorzugsweise ersetzen sie 0,01 bis 30 % des Bindemittels (bezogen auf 100 % des eingesetzten Bindemittels).

Die Weichmacher stammen aus den chemischen Klassen Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat und Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylbenzophenon.

Als Lösungs- bzw. Verdünnungsmittel kommt vorzugsweise Wasser in Frage, gegebenenfalls in Mischung mit einem oder mehreren der oben genannten Lösungs- bzw. Verdünnungsmittel, Emulgatoren und Dispergatoren.

Technische Materialien sind erfindungsgemäß nicht lebende Materialien, die für die Verwendung in der Technik zubereitet worden sind. Beispielsweise können technische Materialien, die durch erfindungsgemäße Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Bevorzugte technische Materialien im Sinne der Erfindung sind Klebstoffe, Leime, Papiere und Kartone, Leder, Holz, Anstrichmittel, Kühlschmiermittel, wäßrige Hydraulikflüssigkeiten und Kühlkreisläufe.

Die erfindungsgemäßen Wirkstoffkombinationen, Mittel bzw. Konzentrate werden vorzugsweise zum Schutz von Leder, Holz und Holzwerkstoffen gegen Mikroorganismen, z.B. gegen leder-, holzzerstörende oder leder-, holzverfärbende Pilze, insbesondere im temporären Holzschutz eingesetzt werden.

Unter Holz, welches durch die erfindungsgemäßen Mischungen geschützt werden kann, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfenster und -türen, Sperrholz, Spanplatten, Tischlerarbeiten oder Holzprodukte die ganz allgemein beim Hausbau oder in der Bautischlerei Verwendung finden.

Ein besonders effektiver Holzschutz wird durch großtechnische Imprägnierverfahren, z.B. Vakuum-, Doppelvakuum- oder Druckverfahren erzielt.

Die Wirksamkeit und das Wirkungsspektrum der erfindungsgemäßen Wirkstoffkombination bzw. den daraus herstellbaren Mitteln, Konzentraten oder ganz allgmein Formulierungen wird erhöht, wenn gegebenenfalls weitere antimikrobiell wirksame Stoffe, Fungizide, Insektizide oder andere Wirkstoffe zur Vergrößerung des Wirkspektrums oder Erzielung besonderer Effekte wie z.B. dem zusätzlichen Schutz vor Insekten zugesetzt werden. Besonders günstige Mischungspartner sind z.B. die folgenden Verbindungen:

4

Sulfenamide wie Dichlofluanid (Euparen), Tolylfluanid (Methyleuparen), Folpet, Fluorfolpet; Thiocyanate wie Thiocyanatomethylthiobenzothiazol (TCMTB), Methylenbisthiocyanat (MBT); Morpholinderivate wie $C_{11}$-$C_{14}$-4-Alkyl-2,6-dimethylmorpholinhomologe (Tridemorph), (±)-cis-4-[3-tert.-Butylphenyl)-2-methylpropyl]-2,6-dimethylmorpholin (Fenpropimorph), Falimorph; Phenole wie o-Phenylphenol, halogenierte Kresole, Tribromphenol, Tetrachlorphenol, Pentachlorphenol, 3-Methyl-4-chlorphenol; Dichlorphen; Iodpropargylderivate wie Iodpropargyl-butylcarbamat (IPBC), -chlorphenylformal, -phenylcarbamat, -hexylcarbamat, -cyclohexylcarbamat; Isothiazolinone wie N-Methylisothiazolin-3-on, 5-Chlor-N-methylisothiazolin-3-on, 4,5-Dichlor-N-octylisothiazolin-3-on, N-Octylisothiazolin-3-on (Octhilinone); Pyridine wie 1-Hydroxy-2-pyridinthion (und ihre Na-, Fe-, Mn, Zn-Salze) Tetrachloro-4-methyl-sulphonylpyridin, Tetrachlor-4-methyl-sulphonylpyridin; Metallseifen wie Zinn-, Kupfer-, Zink-naphthenat, -octoat, -2-ethylhexanoat, -oleat, -phosphat, -benzoat, -oxid; Zinksalze von Dialkyldithiocarbamaten; Tetramethylthiuramdisulfid (TMTD); 2,4,5,6-Tetrachlorisophthalonitril (Chlorthalonil); Benzthiazole wie 2-Mercaptobenzothiazol; Thiazolylbenzimidazol; Chinoline wie $\gamma$-Hydroxychinolin; Benzylalkoholmono(poly)hemiformal;Tris-N-(cyclohexyldiazeniumdioxy)-aluminium, N-(Cyclohexyldiazeniumdioxy)-tributylzinn.

Als Insektizide werden bevorzugt zugesetzt:

Phosphorsäureester wie Azinphos-ethyl, Azinphos-methyl, 1-(4-Chlorphenyl)-4-(O-ethyl, S-propyl)-phosphoryloxypyrazol (TIA-230), Chlorpyrifos, Coumaphos, Demeton, Demeton-S-methyl, Diazinon, Dichlorvos, Dimethoate, Carbamate wie Aldicarb, Bendiocarb, BPMC (2-(1-Methylpropyl)phenylmethylcarbamat), Butocarboxim, Butoxicarboxim, Carbaryl, Carbofuran, Carbosulfan, Cloethocarb, Isoprocarb, Methomyl, Oxamyl, Pirimicarb, Promecarb, Propoxur und Thiodicarb;

Pyrethroide wie Allethrin, Alphamethrin, Bioresmethrin, Byfenthrin (FMC 54 800), Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluormethylvinyl)cyclopropancarboxylat, Fenpropathrin, Fenfluthrin, Fenvalerate, Flucythrinate, Flumethrin, Fluvalinate, Permethrin und Resmethrin; Nitroimide wie 1-[(6-Chlor-3-pyridinyl)-methyl]-4,5-dihydro-N-nitro-1H-imidazol-2-amin (Imidacloprid).

Als andere Wirkstoffe kommen in Betracht Algizide, Molluskizide, Wirkstoffe gegen "sea animals", die sich auf z.B. Schiffsbodenanstrichen ansiedeln.

Die zum Schutz der technischen Materialien verwendeten mikrobiziden Mittel oder Konzentrate enthalten die erfindungsgemäßen Wirkstoffkombinationen in einer Konzentration von 0,01 bis 95 Gew.-%, insbesondere 0,01 bis 60 Gew.-%, daneben gegebenenfalls 0,001 bis 10 Gew.-% eines geeigneten weiteren Fungizids, Insektizids oder eines weiteren Wirkstoffs wie oben genannt.

Die erfindungsgemäßen Wirkstoffkombinationen bzw. Mittel ermöglichen in vorteilhafter Weise, die bisher verfügbaren mikrobiziden Mittel durch effektivere und umweltverträglichere zu ersetzen. Sie zeigen eine gute Stabilität und haben in vorteilhafter Weise ein breites Wirkungsspektrum.

Die nachfolgenden Beispiele dienen zur Erläuterung der Erfindung ohne sie darauf zu limitieren. Teile und Prozentangaben bedeuten Gewichtsteile bzw. Gewichtsprozente.

Beispiel 1

Mikrobizides Gemisch auf Basis Tebuconazol, BCM und $C_{12}$/$C_{14}$-Alkyl-benzyldimethyl-ammoniumchlorid

21,6 g $C_{12}$/$C_{14}$ Alkyl-benzyl-dimethylammoniumchlorid werden in 845 ml Wasser gelöst vorgelegt. Unter Rühren werden 34 g konzentrierte Salzsäure hinzugefügt. Hierzu werden 80 g Tebuconazol und 20 g BCM gegeben. Nach zweistündigem Rühren bei 65 - 70°C erhält man eine klare, stabile wäßrige Formulierung des Wirkstoffgemischs, die sich beliebig weiter mit Wasser verdünnen läßt.

Beispiel 2

Mikrobizide Wirksamkeit der erfindungsgmemäßen Wirkstoffmischungen

Diese Wirksamkeit kann an Hand der MHK (minimale Hemmkonzentration)-Werte belegt werden.
Bestimmung der MHK-Werte:
Zum Nachweis der Wirksamkeit gegen Pilze, Hefen und Bakterien wurden die minimalen Hemm-Konzentrationen (MHK) erfindungsgemäßer Mischungen bestimmt:
Ein Agar, der aus Bierwürze und Pepton hergestellt wird, wird mit erfindungsgemäßen Wirkstoffen in Konzentrationen von 0,1 mg/l bis 5.000 ml/l versetzt. Nach Erstarren des Agars erfolgt Kontamination mit Reinkulturen der in der Tabelle aufgeführten Testorganismen. Nach 2-wöchiger Lagerung bei 28°C und 60 bis 70 % rel. Luftfeuchtigkeit wird die MHK bestimmt. MHK ist die niedrigste Konzentration an Wirkstoff, bei der keinerlei Bewuchs durch die verwendete Mikrobenart erfolgt; sie ist in der nachstehenden <u>Tabelle 1</u> angegeben.

Tab. 1

| MHK-Werte des Gemischs gegen Schimmelpilze, Hefen und Bakterien | |
| --- | --- |
| Prüfkeime | Gemisch gemäß Beispiel 1 MHK-Werte in mg/l |
| Penicillium brevic. | 50 |
| Chaetomium globosum | 10 |
| Aspergillus niger | 50 |
| Lentius tigrinus | 5 |
| Sclerophoma pityoph. | 5 |
| Trichoderma viride | 75 |
| Cladosporium herb. | 5 |
| Alternaria tenuis | 400 |
| Aureobasidum pull. | 5 |
| Escherichia coll | 800 |
| Pseudomonas fluorescens | >800 |
| Bacillus subtilis | 50 |
| Aeromonas punctata | 100 |
| Proteus mirabilis | >800 |
| Aerobacter Aerogenes | 250 |
| Bacillus mycoides | 75 |
| Leuconostoc mesenteroides | 100 |
| Staphylococc. aureus | 50 |
| Pseudomonas aerug. | >800 |
| Rhodotorula mucilaginosa | 100 |
| Candida albicans | 75 |
| Candida krusel | 35 |
| Saccharomyces bailil | 7,5 |
| Torula rubra | 100 |
| Saccharomyces cerivisiae | 250 |
| Torula utilis | 35 |

Beispiel 3

Lederkonservierung

Geprüft wird die Wirksamkeit der Mischung gemäß Beispiel 1 für die Konservierung von feuchtem Chromleder (wetblue). Die Mischung gemäß Beispiel 1 wird während der Chromgerbung von Rinderhaut zugesetzt. Aus dem erhaltenen wetblue werden dann runde Proben (Ø 3 cm) entnommen, die in Anlehnung an die Schweizer Prüfnorm SNV 195 921, im Agar-Diffusions-Test in Petrischalen auf kontaminierten Agar aufgelegt werden Zur Kontamination dienen die Prüfpilze Aspergillus niger, Trichoderma viride und Penicillium glaucum. Die Proben werden bei 28° C/80-100% Luftfeuchte im Brutschrank gelagert. Es wird geprüft, wie lange die wetblue-Proben ohne Schimmelbefall bleiben.

| Mikrobizid | Dosierung in Gew.-% bez. auf Blößengewicht | Zeit ohne Schimmelbefall (Tage) | | |
|---|---|---|---|---|
| | | A. niger | P. glaucum | T. viride |
| Beispiel 1 | 0,05 | > 28 | > 28 | 5 |
| | 0,10 | > 28 | > 28 | 17 |
| | 0,25 | > 28 | > 28 | > 28 |
| Vergleichsbeispiel | | | | |
| A*) | 0,05 | 4 | > 28 | 4 |
| | 0,10 | 5 | > 28 | 4 |
| B**) | 0,08 | 4 | > 28 | 3 |
| | 0,24 | 6 | > 28 | 4 |
| ohne Wirkstoff | - | 3 | 3 | 3 |

```
*)     14,4 % Tebuconazole

        1,0 % BCM

        3,3 % Dodecylbenzolsulfonsäure

       61,3 % Propylenglykol-mono-methylether

       20,0 % ethoxyliertes Nonylphenol (ca. 10 EO)


**)    Alkyl (C₁₂/C₁₄)-benzyldimethyl-ammoniumchlorid
```

Die Ergebnisse belegen die hervorragende Wirksamkeit der erfindungsgemäßen Mikrobizidmischung gemäß Beispiel 1.

**Patentansprüche**

1. Wirkstoffkombination enthaltend Tebuconazole und BCM in Form ihrer Hydrohalogenide und $C_{12}$-$C_{14}$-Alkylbenzyldimethyl-ammoniumchlorid.

2. Mikrobizide Mittel für den Materialschutz, enthaltend eine Wirkstoffkombination gemäß Anspruch 1, Lösungs- bzw. Verdünnungsmittel sowie gegebenenfalls Verarbeitungshilfsmittel und gegebenenenfalls weitere Wirkstoffe.

3. Mikrobizide Mittel gemaß Anspruch 2, enthaltend Wasser.

4. Verfahren zur Bekämpfung von Mikroorganismen, dadurch gekennzeichnet, daß man die Wirkstoffkombination gemäß Anspruch 1 auf Mikroben oder deren Lebensraum einwirken läßt.

5. Verwendung der Wirkstoffkombination gemäß Anspruch 1, als Mikrobizid zum Schutz von technischen Materialien.

6. Verwendung gemaß Anspruch 5 als Fungizid zum Schutz von Leder und Holz.

7. Verwendung der Wirkstoffkombination gemäß Anspruch 1 zur Herstellung von stabilen, gegebenenfalls organisch- lösungsmittel- und emulgatorfreien wäßrigen mikrobiziden Mitteln.

**Claims**

1. Active compound combination, comprising tebuconazole and BCM in the form of their hydrohalides and $C_{12}$-$C_{14}$-alkyl-benzyldimethyl-ammonium chloride.

2. Microbicidal compositions for the preservation of materials, comprising an active compound combination according to Claim 1, solvents or diluents and if appropriate processing auxiliaries and if appropriate other active compounds.

3. Microbicidal compositions according to Claim 2, comprising water.

4. Method of combating microorganisms, characterised in that the active compound combination according to Claim 1 is allowed to act on microbes or their environment.

5. Use of the active compound combination according to Claim 1 as a microbicide for the preservation of industrial materials.

6. Use according to Claim 5, as a fungicide for the preservation of leather and wood.

7. Use of the active compound combination according to Claim 1 for the preparation of stable, optionally organic solvent- and emulsifier-free aqueous microbicidal compositions.

**Revendications**

1. Combinaison de substances actives contenant du Tebuconazol et du BCM, à l'état d'halogénohydrates, et un chlorure d'(alkyle en $C_{12}$-$C_{14}$)benzyldiméthylammonium.

2. Produits microbicides pour la protection des matériaux, contenant une combinaison de substances actives selon la revendication 1, des solvants ou diluants et le cas échéant des produits auxiliaires de fabrication et d'utilisation et le cas échéant d'autres substances actives.

3. Produits microbicides selon la revendication 2, contenant de l'eau.

4. Procédé pour combattre des micro-organismes caractérisé en ce que l'on fait agir la combinaison de substances actives selon la revendication 1 sur des microbes ou leur habitat.

5. Utilisation de la combinaison de substances actives selon la revendication 1 en tant que microbicide pour la protection des matériaux techniques.

6. Utilisation selon la revendication 5, en tant que fongicide pour la protection du cuir et du bois.

7. Utilisation de la combinaison de substances actives selon la revendication 1, pour la préparation de produits microbicides aqueux stables, contenant éventuellement des solvants organiques mais exempts d'agents émulsionnants.